# EUROPÄISCHE PATENTANMELDUNG

(11) **EP 2 088 336 A1**
(43) Veröffentlichungstag der Anmeldung: **12.08.2009**
(21) Anmeldenummer: 09001649.4
(22) Anmeldetag: 06.02.2009
(51) Int. Cl.: F16B 7/04

(54) **Klemmverbinder**

(30) Priorität: 08.02.2008 EP 08002331
(71) Anmelder: Hestex Systems B.V., 7332 BE Apeldoorn (NL)
(72) Erfinder: Offenbroich, Adrian, 40217 Düsseldorf (DE); Sint Nicolaas, Arie, Belnem, Bonaire (AN)
(74) Vertreter: Stenger, Watzke & Ring

(57) **Zusammenfassung**

Die vorliegende Erfindung betrifft einen Klemmverbinder (108) zur lösbaren Verbindung zweier Bauelemente, mit einem Gehäuse (100), welches in einem Aufnahmeraum eines ersten der Bauelemente festlegbar ist, wobei in dem Gehäuse (100) ein mittels eines Betätigungselements (102) zwischen einem verriegelnden und einem nicht verriegelnden Zustand bewegbares Ankerelement (112) einer Ankereinheit (114) angeordnet ist, welches Ankerelement (112) zur Verbindung der Bauelemente im verriegelten Zustand in eine Ausnehmung des zweiten Bauelements eingreift. Um einen Klemmverbinder vorzuschlagen, der vor dem Hintergrund sicherheitsrelevanter Überlegung eine verbesserte Handhabung ermöglicht, wird vorgeschlagen, dass der Klemmverbinder (108) eine Arretierungseinrichtung (94) für das Betätigungselement (102) aufweist.

## Beschreibung

Die Erfindung betrifft einen Klemmverbinder zur lösbaren Verbindung zweier Bauelemente, mit einem Gehäuse, welches in einem Aufnahmeraum eines ersten der beiden Bauelemente festlegbar ist, wobei in dem Gehäuse ein mittels eines Betätigungselements zwischen einem verriegelnden und einem nicht verriegelnden Zustand bewegbares Ankerelement einer Ankereinheit angeordnet ist, welches Ankerelement zur Verbindung der Bauelemente im verriegelten Zustand in eine Ausnehmung des zweiten Bauelements eingreift.

Gattungsgemäße Klemmverbinder sind aus dem Stand der Technik an sich bekannt, so zum Beispiel aus der EP 1 234 985 B1.

Derlei Klemmverbinder finden beispielsweise im Messebau Verwendung und dienen dazu, Metallstreben, -pfosten oder dergleichen von Regalsystemen, Messeständen und/oder dergleichen Aufbauten miteinander zu verbinden. Dabei liegt der besondere Vorteil dieser Klemmverbinder darin, dass sie eine einfache Verbindungsausbildung ermöglichen, was eine einfache und vor allem schnelle Montage beziehungsweise Demontage ermöglicht.

Obgleich sich vorbekannte Klemmverbinder im alltäglichen Praxiseinsatz bewährt haben, besteht Verbesserungsbedarf, insbesondere mit Blick auf eine sicherungstechnisch verbesserte Handhabung.

Es ist deshalb die **Aufgabe** der Erfindung, einen Klemmverbinder der vorgenannten Art dahingehend zu verbessern, dass vor dem Hintergrund sicherheitsrelevanter Überlegung eine verbesserte Handhabung ermöglicht ist.

Zur **Lösung** dieser Aufgabe wird mit der Erfindung ein Klemmverbinder der vorgenannten Art vorgeschlagen, der sich durch eine Arretierungseinrichtung für das Betätigungselement auszeichnet.

Das Betätigungselement des Klemmverbinders dient dazu, die Ankerelemente der Ankereinheit zu verfahren. Dem Grunde nach können die Ankerelemente zwei Positionen einnehmen, nämlich zum einen die verriegelte Stellung sowie zum anderen die entriegelte Stellung. Das Betätigungselement ist bevorzugter Weise verdrehbar ausgebildet, so dass mit einfachen Werkzeugen, wie zum Beispiel einem Schraubendreher, einem Imbusschlüssel oder dergleichen, eine Verdrehbewegung des Betätigungselements mit dem Ergebnis vorgenommen werden kann, dass die Ankerelemente der Ankereinheit aus der verriegelten in die entriegelte Stellung überfahren und umgekehrt. Um eine einfache und vor allem leichtgängige Betätigung der Ankerelemente zu gestatten, ist es zweckmäßig, das Betätigungselement leichtgängig auszugestalten, insbesondere zu lagern.

Die leichtgängige Ausgestaltung des Betätigungselements hat in der Vergangenheit immer wieder zu Problemen geführt. So hat sich nämlich herausgestellt, dass sich insbesondere durch Vibrationen ungewollte Verdrehbewegungen des Betätigungselements einstellen können. Derlei ungewollte Bewegungen des Betätigungselements führen in nachteiliger Weise im schlimmsten Fall dazu, dass sich ein Ankerelement ungewollt löst, was zu einem völligen Versagen der mit dem Klemmverbinder ausgebildeten Verbindung führt.

Zur Überwindung des vorbeschriebenen Nachteils wird mit der Erfindung vorgeschlagen, dass der Klemmverbinder über eine Arretiereinrichtung verfügt, mittels derer das Betätigungselement lagefixiert ist. Der besondere Vorteil der erfindungsgemäßen Ausgestaltung liegt darin, dass eine ungewollte Verdrehbewegung des Betätigungselements unterbunden ist. Ein ungewolltes Lösen einer Verbindung ist bei der erfindungsgemäßen Ausgestaltung des Klemmverbinders deshalb nicht möglich, womit sich der erfindungsgemäße Klemmverbinder gegenüber herkömmlichen und aus dem Stand der Technik bekannten Klemmverbindern insbesondere aus Sicherheitsgründen als vorteilhaft erweist.

Die Arretiereinrichtung ist bevorzugterweise derart ausgebildet, dass eine Arretierung, das heißt, Lagefixierung des Betätigungselements gegenüber dem Gehäuse des Klemmverbinders sowohl in der verriegelnden Stellung des Betätigungselements als auch in der entriegelnden Stellung des Betätigungselements möglich ist. Es wird also nicht nur eine Lagearretierung bezüglich der verriegelten Stellung sondern auch bezüglich der entriegelten Stellung erreicht. Diese Ausgestaltung hat den Vorteil, dass demontierte Klemmverbinder für eine Montage stets einsatzbereit sind und es im Vorfeld einer Montage nicht erforderlich ist, den Klemmverbinder daraufhin zu überprüfen, ob vor einer bestimmungsgemäßen Montage zunächst die Ankerelemente der Ankereinheit in ihre entriegelte Stellung zu überfahren sind. Damit gestattet es die erfindungsgemäße Ausgestaltung, eine Montage schneller durchführen zu können, da stets sichergestellt ist, dass sich die Klemmverbinder in einem montagefähigen Zustand befinden.

Es ist gemäß einem weiteren Merkmal der Erfindung vorgesehen, dass die Arretierungseinrichtung über ein Arretierungsmittel verfügt, welches gegenüber dem Gehäuse festgelegt ist. Das Betätigungselement ist gegenüber dem Gehäuse und damit auch gegenüber dem am Gehäuse festgelegten Arretierungsmittel relativ verdrehbar. Im arretierten Zustand stützt sich also das Betätigungselement gegenüber dem Arretierungsmittel ab, welches sich wiederum gegenüber dem Gehäuse des Klemmverbinders abstützt.

Das Arretierungsmittel ist beispielsweise in Form einer Kugel, eines Stifts, eines Bolzens, einer Schraube oder dergleichen ausgebildet. Von erfindungswesentlicher Bedeutung in diesem Zusammenhang ist, dass das Arretierungsmittel dazu geeignet ist, das Betätigungselement in seiner relativen Verdrehstellung gegenüber dem Gehäuse zu sichern, und zwar derart, dass eine ungewollte Verdrehbewegung des Betätigungselements relativ gegenüber dem Gehäuse verhindert ist. Zu diesem Zweck kann beispielsweise vorgesehen sein, dass das Arretierungsmittel kraft- und/oder formschlüssig mit dem Betätigungselement zusammenwirkt. Gemäß einer besonderen Ausführungsform ist in diesem Zusammenhang vorgesehen, dass das Arretierungsmittel eine Kugel ist, die unter Federvorspannung in einem Lagerblock in Radialrichtung des Betätigungselements verschieblich gelagert ist. Am Betätigungselement sind korrespondierend zur Kugel sogenannte Arretierungsnuten ausgebildet, in die die Kugel aufgrund der auf sie einwirkenden Federkraft hineingedrückt wird, wodurch dann die arretierte Stellung des Betätigungselements gegenüber dem Arretierungsmittel erreicht ist. Um das Betätigungselement zu verfahren, bedarf es eines bestimmten, das heißt, bewussten Kraftaufwandes, um nämlich die Kugel entgegen der auf sie einwirkenden Federkraft in radialer Richtung weg vom Betätigungselement zu verfahren. Erst dann ist eine Betätigung des Betätigungselements möglich, wobei die Kugel aufgrund ihrer Federvorspannung automatisch in die Arretierungsnut der nach einem bestimmungsgemäßen Verfahren des Betätigungselements zugehörigen Stellung einfährt. Bevorzugterweise ist die Vorspannung einstellbar, so dass es möglich wird, eine Ausgewogenheit zwischen Arretierkraft einerseits und der für eine Verdrehbewegung des Betätigungselements notwendigen Verdrehkraft andererseits herzustellen.

Das das Arretierungsmittel, beispielsweise in Form einer Kugel aufnehmende Bauteil, auch Lagerbock oder Lagerteil genannt, durchgreift im endmontierten Zustand des Klemmverbinders eine im Gehäuse des Klemmverbinders ausgebildete Ausnehmung. Auf diese Weise wird eine form- und damit auch kraftschlüssige Verbindung erreicht, die eine sichere Abstützung des vom Lagerteil gehaltenen Arretierungsmittels gegenüber dem Gehäuse des Klemmverbinders sicherstellt.

Insgesamt wird mit der Erfindung ein Klemmverbinder vorgeschlagen, dessen Besonderheit darin besteht, dass eine ungewollt, beispielsweise durch Vibration induzierte Verdrehbewegung des Betätigungselements unterbunden ist. Im Unterschied zum Stand der Technik kann es also nicht passieren, dass die Ankerelemente der Ankereinheit ungewollt aus der verriegelten Position in die entriegelte Position überfahren. Dies wird durch die nach der Erfindung vorgesehene Arretiereinrichtung erreicht, die eine Festlegung des Betätigungselements relativ gegenüber dem Gehäuse des Klemmverbinders sicherstellt, und zwar in vorgebbaren Stellungen.

Mit der Erfindung ist ferner die Möglichkeit geschaffen, direkt festzustellen, welchen Zustand der Klemmverbinder eingenommen hat. Dies wird erfindungsgemäß dadurch erreicht, dass eine Anzeigeneinheit vorgesehen ist, mit der wenigstens der verriegelnde und/oder nicht verriegelnde, das heißt, entriegelnde Zustand anzeigbar ist.

Eine solche Anzeigeneinheit kann im einfachsten Fall durch eine Markierung gebildet sein, die vom Betätigungselement bereitgestellt ist. Eine solche Markierung kann beispielsweise eine der schon vorbeschriebenen Arretierungsnuten sein, in die zwecks Arretierung des Betätigungselements ein Arretierungsmittel eingreift.

Die Anzeigeneinheit kann natürlich auch in anderer Form mechanischer Natur und/oder elektronisch ausgebildet sein. So kann die Anzeigeneinheit beispielsweise durch einen Hebel gebildet sein, der den möglichen Stellungen des Betätigungselements entsprechende Ausrichtungen einnimmt. Um hier für einen Nutzer visuelle Vereinfachungen vorzusehen, können Farbmarkierungen oder dergleichen vorgesehen sein. Natürlich können nicht nur die beiden vorerläuterten Stellungen, das heißt, Zustände des Betätigungselements, also verriegelter Zustand oder nicht verriegelter Zustand, angezeigt werden, sondern auch Zwischenzustände, Störzustände oder dergleichen. Auf diese Weise kann die Sicherheit verbessert werden. Auch lassen sich natürlich optische und/oder akustische Anzeigemittel einsetzen. Der Phantasie sind insofern keine Grenzen gesetzt. Erfindungsgemäß kommt es allein darauf an, dass durch einen Nutzer auf vergleichsweise einfacher Art unmittelbar erkennbar ist, in welchem Betriebszustand sich ein Klemmverbinder befindet. Dies ist deshalb wichtig, damit möglichst ohne großen Zeitaufwand eine mittels einem erfindungsgemäßen Klemmverbinder ausgestaltete Verbindung zwischen zwei Bauelementen auf Funktionssicherheit überprüft werden kann, was natürlich insbesondere dann zum Tragen kommt, wenn ein zu überprüfendes Regalsystem, ein zu überprüfender Messestand oder dergleichen über eine Vielzahl von einzelnen Verbindungsstellen und damit über eine Vielzahl von einzelnen Klemmverbindern verfügt.

Von besonderem Vorteil ist ferner, wenn eine taktile Überprüfung des Zustandes des Klemmverbinders durch die Anzeigeneinheit ermöglicht ist. Auf diese Weise wird es ermöglicht, eine Überprüfung auch ohne optische Einsehbarkeit des Klemmverbinders und/oder des Betätigungselements vornehmen zu können.

Weitere Vorteile und Merkmale sind der folgenden Beschreibung zweier Ausführungsbeispiele zu entnehmen. Die Zeichnungen sind Schemazeichnungen und dienen nur der Erläuterung der folgenden Ausführungsbeispiele.

### Es zeigen:

- Fig. 1: schematisch eine erfindungsgemäße Vorrichtung zur Einführung in eine Öffnung eines Pfostens,
- Fig. 2: die erfindungsgemäße Vorrichtung in Fig. 1 mit schematisch dargestellten Funktionsbaugruppen,
- Fig. 3: schematisch eine Fernbedienung für die erfindungsgemäße Vorrichtung,
- Fig. 4: eine Schnittansicht einer mechanischen Anzeigeeinheit in Verbindung mit der Erfindung,
- Fig. 5: einen Rückstellmechanismus für die Anzeigeeinheit gemäß Fig. 4,
- Fig. 6: eine vergrößerte Ausschnittsdarstellung der Anzeigeeinheit gemäß Fig. 4,
- Fig. 7: eine schematische Ansicht eines Kopplungsbereichs eines Antriebszapfens für eine weitere Ausgestaltung eines Klemmverbinders gemäß der Erfindung,
- Fig. 8: den Antriebszapfen gemäß Fig. 7 in einer seitlichen Schnittansicht,
- Fig. 9: den Antriebszapfen gemäß Fig. 7 in einer perspektivischen Darstellung,
- Fig. 10: einen Haltestift für eine Rasteinheit des Klemmverbinders der Erfindung,
- Fig. 11: ein Klemmverbinder gemäß der zweiten Ausführungsform der Erfindung mit einem Antriebszapfen gemäß der Figuren 7 bis 9 sowie einem Haltestift gemäß Fig. 10 in einer Ansicht auf Ankerelemente einer Ankereinheit, wobei die Ankereinheit in ihrem verriegelnden Zustand dargestellt ist,

- Fig. 12: der Klemmverbinder gemäß Fig. 11 in einer seitlichen Ansicht,
- Fig. 13: der Klemmverbinder gemäß Fig. 11 in einer Draufsicht auf den Antriebszapfen,
- Fig. 14: der Klemmverbinder gemäß Fig. 11 in einem nicht verriegelnden Zustand der Ankereinheit,
- Fig. 15: der Klemmverbinder gemäß Fig. 14 in einer seitlichen Darstellung,
- Fig. 16: der Klemmverbinder gemäß Fig. 14 in einer Draufsicht auf den Antriebszapfen,
- Fig. 17: eine perspektivische Darstellung eines Einsatzgehäuses einer Rasteinheit für den Klemmverbinder gemäß Fig. 11,
- Fig. 18: eine seitliche Schnittansicht des Einsatzgehäuses gemäß Fig. 17 und
- Fig. 19: eine perspektivische Ansicht eines Gehäuses des Klemmverbinders gemäß Fig. 11.

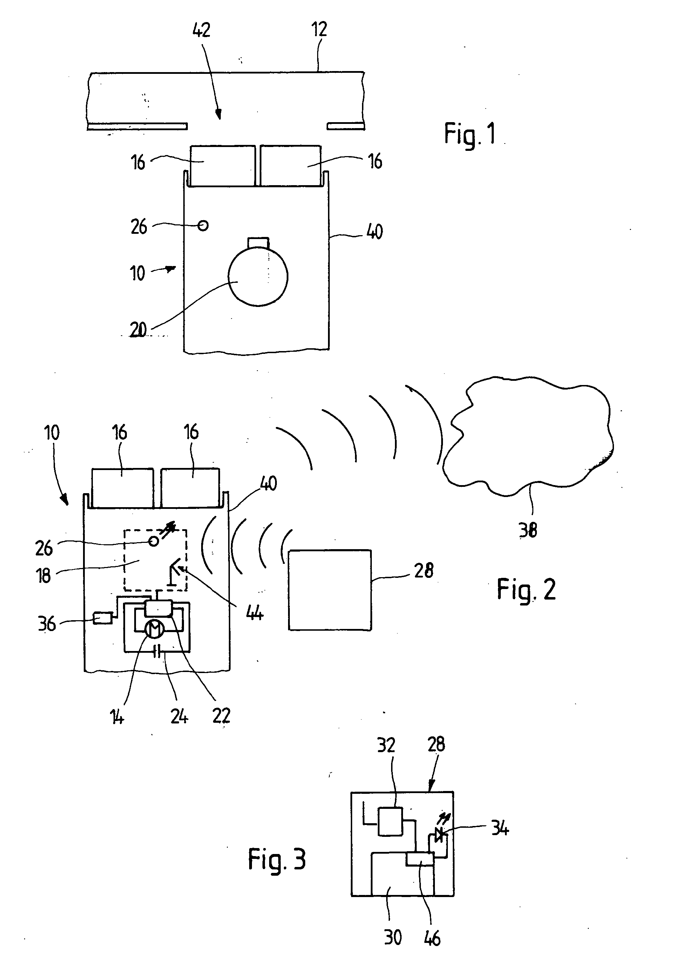

Fig. 1 zeigt einen erfindungsgemäßen Klemmverbinder 10, der zur lösbaren Verbindung mit einem Pfosten 12 vorgesehen ist. Der Pfosten 12 weist hierzu eine Öffnung 42 auf, in die eine Ankereinheit mit Riegelklauen 16 eingeführt werden kann und dort festlegbar ist. Im festgelegten Zustand befindet sich der Klemmverbinder 10 im verriegelnden Zustand. Im entriegelnden Zustand kann der Klemmverbinder 10 dagegen von dem Pfosten 12 entfernt beziehungsweise ausgerichtet werden. Zum Festlegen des Klemmverbinders 10 am Pfosten 12 werden die Riegelklauen 16 mittels eines nicht näher dargestellten Antriebs, der manuell über ein Betätigungselement 20 antreibbar ist, derart verfahren, dass die Riegelklauen 16 einen Rand der Öffnung 42 hintergreifen und auf diese Weise den Klemmverbinder 10 am Pfosten 12 festlegen. Das Betätigungselement 20 weist hierzu eine Torx-Ausnehmung auf, in die ein entsprechender Schlüssel einsetzbar ist, damit das Betätigungselement 20 manuell betätigt werden kann. Wie aus Fig. 1 ferner zu entnehmen ist, ist der Klemmverbinder 10 in einem Gehäuse 40 angeordnet, in dem das Betätigungselement 20 drehbar gelagert ist. Eine Drehbewegung des Betätigungselementes 20 wird in eine entsprechende Bewegung der Riegelklauen 16 mittels des Antriebs umgesetzt. Darüber hinaus ist der Fig. 1 zu entnehmen, dass eine Leuchtdiode 26 vorgesehen ist. Mit der Leuchtdiode 26 kann der Zustand des Klemmverbinders 10 visuell abgelesen werden. In der vorliegenden Ausgestaltung ist vorgesehen, dass der verriegelnde Zustand durch ein grünes Leuchten angezeigt wird, wohingegen der nicht verriegelnde Zustand durch ein rotes Leuchten der Leuchtdiode 26 angezeigt wird. Tritt eine Störung auf, leuchtet die Leuchtdiode 26 gelb.

Fig. 2 zeigt schematisch den Klemmverbinder 10 gemäß der Fig. 1, wobei jedoch hier elektronische Schaltgruppen im Gehäuse 40 des Klemmverbinders 10 dargestellt sind. Fig. 2 zeigt eine Anzeigeeinheit 18, die die Leuchtdiode 26 aufweist und diese entsprechend ansteuert. Fig. 2 ist ferner zu entnehmen, dass die Anzeigeeinheit 18 mit einer Steuereinheit 22 in Verbindung steht. An der Steuereinheit 22 ist ferner ein Antriebsmotor 14 angeschlossen, mit dem die Riegelklauen 16 in vorbestimmter Weise angetrieben werden können. Darüber hinaus ist die Steuereinheit 22 mit einem Kondensator 24 verbunden, der sämtliche elektronischen Baugruppen 14, 18, 22, 26, 44 mit Energie versorgt. Zur Detektierung des Zustands der Riegelklauen 16 und damit des Klemmverbinders 10 ist ein Sensor 36 vorgesehen, der vorliegend auf optischer Basis arbeitet. Dieser detektiert die Zustände der Riegelklauen 16. Ferner ist die Steuerung mit einer Sende-Empfangseinheit 44 verbunden, mit der eine Nahfunkverbindung zu einer Fernsteuerung 28 (Fig. 3) herstellbar ist sowie mit der der Zustand über eine weitere Funkverbindung an eine Zentrale 38 übermittelt werden kann.

In Fig. 3 ist die Fernsteuerung 28 dargestellt, mit der der Klemmverbinder 10 ferngesteuert werden kann. Die Fernsteuerung 28 weist hierzu eine Sende-Empfangseinheit 32 auf, die mit einer Taste 30 in elektrischer Verbindung steht. Vorliegend ist die Taste 30 als elektromechanische Drucktaste ausgebildet. Durch Betätigen der Taste 30 wird die Sende-Empfangseinheit 32 aktiviert, ein Signal über Nahfunk an den Klemmverbinder 10, und zwar dessen Sende-Empfangseinheit 44 zu senden. Das Signal ist vorliegend digital kodiert. Die Funkübertragung erfolgt mittels FSK (Frequenzumtastung) in einem Frequenzbereich von etwa 27 MHz. Die Sende-Empfangseinheit 44 des Klemmverbinders 10 detektiert das Signal und liefert einen entsprechenden Befehl an die Steuereinheit 22. Diese registriert den Befehl und veranlasst ein Wechseln des Zustands der Riegelklauen 16. Hierzu wird der Motor 14 entsprechend angesteuert, so dass die Riegelklauen 16 in den nicht eingenommenen Zustand überführt werden. Die Energie hierzu erhält der Klemmverbinder 10 über die Nahfunkverbindung von der Fernsteuerung 30. Die Fernsteuerung 30 weist hierzu eine nicht näher dargestellte Batterie auf. Ebenfalls nicht näher dargestellte Umwandlungsmittel setzen die Empfangsenergie der Sende-Empfangseinheit 44 in eine elektrische Energie um und speichern diese für die spätere Verwendung im Kondensator 24.

Mit dem Sensor 36 wird kontinuierlich der aktuelle Zustand der Riegelklauen 16 überwacht. So kann mit dem Sensor 36 nicht nur das Erreichen der jeweiligen Zustände, und zwar des verriegelnden und des nicht verriegelnden Zustands, ermittelt werden, sondern es kann darüber hinaus auch ein Zwischenzustand beobachtet werden, so dass gegebenenfalls entsprechende Meldungen an die Steuerung 22 erfolgen können. Wird nach einer vorgegebenen Zeitdauer von im vorliegenden Fall etwa 0,5 sec der gewünschte Zustand nicht erreicht, so erfolgt von der Steuerung 22 eine Störungsmeldung über die Anzeigeeinheit 18 und deren Leuchtdiode 26, indem diese gelb leuchtet. Wird dagegen der gewünschte Zustand erreicht, so wird dies durch die entsprechende Farbe durch die Leuchtdiode 26 angezeigt. Sobald die Kommunikationsverbindung zwischen der Fernsteuerung 28 und dem Klemmverbinder 10 unterbrochen ist, wird die Anzeigeeinheit 18 deaktiviert, um Energie zu sparen.

Während des Empfangs des Signals von der Fernsteuerung 28 wird zugleich ein weiteres Funksignal von der Sende-Empfangseinheit 44 ausgesendet, welches den Zustand aktuell anzeigt und von einer Zentrale 38 empfangen wird. In der Zentrale 38 wird das Signal entsprechend gespeichert und für eine spätere Auswertung bereitgehalten. Auf diese Weise kann der Arbeitsfortschritt auf der Montage nachgehalten werden. Treten darüber hinaus Störungsmeldungen auf, so kann seitens der Zentrale 38 eine zusätzliche Sicherheit dahingehend erreicht werden, dass die Zentrale 38 eine Überprüfung des Klemmverbinders 10 anordnet. Hierzu weist jede Sende-Empfangseinheit 44 eine Identifikation auf, die jeweils an die Gegenstelle 38, 28 übermittelt wird. Hierdurch lässt sich auch in komplexen Aufbauten der jeweilige Klemmverbinder 10 identifizieren. Einzelne und/oder alle elektronischen Baugruppen können in Halbleiter-Chips integriert sein, die an geeigneter Stelle der Klemmvorrichtung 10 angeordnet sind. Ein solcher Chip ist vorliegend als Transponder-Chip ausgebildet, in welchem die Identifikation abfragbar gespeichert ist. Vorliegend ist ferner vorgesehen, dass von der Fernbedienung ein Signal gesendet wird, welches die Identifikation der Klemmvorrichtung 10 umfasst, so dass diese prüfen kann, ob das Signal für sie bestimmt ist. Erst nach positivem Prüfungsergebnis wird die Signalinformation an die Steuerung 22 weitergeleitet. Damit der Monteur weiß, welche Identifikation gesendet werden muss, um die Klemmvorrichtung 10 zu aktivieren, ist diese vorliegend auf deren Gehäuse 40 eingeprägt.

Das an die Zentrale 38 ausgesendete Signal kann auch von der Fernbedienung 28 über deren Sende-Empfangseinheit 32 empfangen werden. Es wird dort ausgewertet und mittels einer Steuereinheit 46 wird eine entsprechende Leuchtdiode 34 angesteuert, die im Wesentlichen den Funktionen der Leuchtdiode 26 entspricht. Auf diese Weise erfolgt eine zusätzliche Meldung an die Fernsteuerung 28, so dass der Zustand des Klemmverbinders 10 nicht nur an diesem selbst, sondern auch an der Fernsteuerung 28 überprüft werden kann.

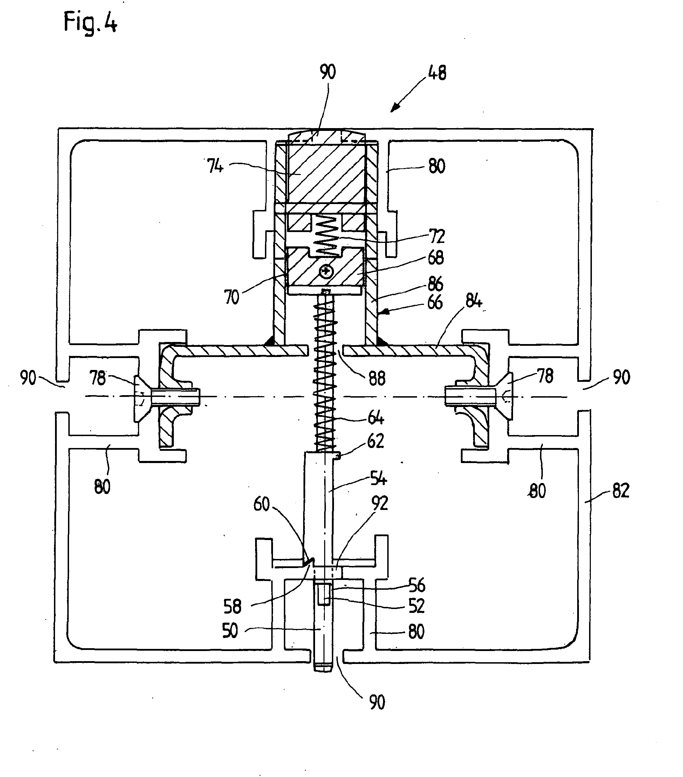

Fig. 4 zeigt einen Schnitt durch einen nicht näher bezeichneten Klemmverbinder im Bereich einer mechanischen Anzeigeeinheit 48 gemäß einer weiteren Ausgestaltung der Erfindung. Ein Profil 82 des Klemmverbinders ist mit nach innen ragenden Profilansätzen 80 versehen, an denen die Anzeigeeinheit 48 angeordnet ist. Eine Halterung 66 ist mittels eines Haltebügels 84 an zwei gegenüberliegenden Profilansätzen 80 mittels Schraubbefestigungen 78 befestigt. Mittig ist am Haltebügel 84 eine Hülse 86 nach oben ragend angeschweißt, die in einem Profilansatz 80 quer zu den beiden gegenüberliegenden Profilansätzen 80 eingreift. Die Hülse 86 ragt bis zum inneren Rand des äußeren Profilschenkels des Profils 82.

Die Profilansätze 80 weisen nach außen Öffnungen 90 auf. Durch diese können die Schraubbefestigungen 78 betätigt werden. Ebenfalls dient die Profilöffnung 90 im oberen Bereich in Fig. 4 des Profils 82 dazu, visuell die Position eines Anzeigeelements 74 erkennen zu können. Dieses ist axial beweglich in der Hülse 86 gelagert und ragt je nach anzuzeigendem Zustand in den Bereich der Öffnung 90 oder ist von ihr entfernt.

Axial benachbart zum Anzeigeelement 74 ist ein Kolben 68 axialverschieblich in einem durch die Hülse 86 gebildeten Zylinder 70 gelagert. Zwischen den gegenüberliegenden Stirnseiten des Anzeigeelements 74 und des Kolbens 68 ist konzentrisch zu einer nicht näher bezeichneten Achse der Hülse 86 eine Spiralfeder 72 angeordnet, die sich sowohl am Anzeigeelement 74 als auch am Kolben 68 abstützt. Die Spiralfeder 72 ist ferner an beiden Elementen 68, 74 festgelegt, so dass eine Abwärtsbewegung des Kolbens 68 ebenfalls zu einer Abwärtsbewegung des Anzeigeelements 74 führt. Durch die Feder 72 wird erreicht, dass Toleranzen oder Ungenauigkeiten bei der Bewegung gegenüber dem Anzeigeelement 74 ausgeglichen werden. Auf diese Weise ist gewährleistet, dass das Anzeigeelement 74 in seiner maximal herausgefahrenen Stellung am äußeren Rand des Profils 82 zur Anlage kommt. Die Stellung des Kolbens 68 ist abhängig vom jeweiligen Verriegelungszustand des Klemmverbinders 10.

Auf der dem Anzeigeelement 74 gegenüberliegenden Seite des Kolbens 68 ist ebenfalls konzentrisch zur Längsachse der Hülse 86 eine Antriebsstange 54 vorgesehen, die in einer nicht näher bezeichneten Bohrung des Kolbens 68 axial beweglich und begrenzt schwenkbar geführt ist. Die Antriebsstange 54 ragt durch eine Bohrung 88 des Haltebügels 84 bis in den Bereich des der Hülse 86 gegenüberliegenden Profilansatzes 80. In einem mittleren Bereich weist die Antriebsstange 54 einen Absatz 62 auf, an dem sich eine die Antriebsstange 54 umgebende Spiralfeder 64 abstützt. An der gegenüberliegenden Seite ist die Spiralfeder 64 am Kolben 68 abgestützt. Hierdurch wird erreicht, dass die Antriebsstange 54 in Richtung vom Kolben 68 weg vorgespannt ist.

Im Bereich des unteren Profilansatzes 80 ist die Antriebsstange 54 mit einer Verbreiterung versehen, die eine Rastnut 60 aufweist, die in axialer Richtung ausgebildet ist. Wie aus Fig. 4 zu entnehmen ist, kann die Rastnut 60 mit einer Rastnase 58 des Profilansatzes 80 in Wirkverbindung gebracht werden. Der Profilansatz 80 weist eine Öffnung 92 auf, durch die die Antriebsstange 54 durchragt. In dem in Fig. 4 dargestellten Zustand ist die Antriebsstange 54 mit ihrer Rastnut 60 an der Rastnase 58 verrastet. Durch die Vorspannung der Feder 64 wird dieser Zustand eingerastet gehalten.

Der untere Abschnitt der Antriebsstange 54 weist einen Zapfen 52 auf, auf den ein Betätigungsstift 50, der eine Sackbohrung 56 aufweist, aufgesteckt werden kann. Der Betätigungsstift 50 ragt im aufgesteckten Zustand durch die untere Öffnung 90 des Profils 82. Hierdurch ist das Anzeigeelement manuell betätigbar, indem nämlich der Betätigungsstift 50 mit einem Finger leicht betätigt wird, durch geringfügiges Verschwenken die Rastnutverbindung außer Eingriff gebracht wird und die Antriebsstange 54 durch die Öffnung 92 sich nach außen bewegt. Hierdurch wird zugleich eine Abwärtsbewegung des Kolbens 68 und damit auch eine Abwärtsbewegung des Anzeigeelements 74 bewirkt, wodurch angezeigt wird, dass der Klemmverbinder 10 nunmehr in einen entriegelnden Zustand gebracht werden kann. Der Betätigungsstift 50 ist abnehmbar ausgestaltet, um Beschädigungen während der Lagerung zu vermeiden.

Der Klemmverbinder 10 kann nunmehr in den entriegelnden Zustand überführt und vom Pfosten entfernt werden.

Im umgekehrten Fall ist zunächst der Klemmverbinder 10 am Pfosten vorschriftsmäßig festzulegen. Der aus der unteren Öffnung 90 herausragende Betätigungsstift 50 kann in diesem Fall manuell in die Öffnung 90 hineingedrückt werden, und zwar soweit, bis die Rastnut 60 die Öffnung 92 passiert hat und mit der Rastnase 58 in Eingriff bringbar ist. Durch leichtes seitliches Verschwenken wird die Rastverbindung hergestellt. Zugleich wird durch diese Betätigung der Kolben 68 axial in Richtung Anzeigeelement 74 verschoben, welches aufgrund der Feder 72 in die Öffnung 90 auf der gegenüberliegenden Seite bewegt wird. Da der Weg des Kolbens 68 geringfügig größer als der des Anzeigeelements 74 ist, wird das Anzeigeelement 74 aufgrund der Federvorspannung durch die Feder 72 in dieser Position gehalten. Hierdurch wird nun der verriegelnde Zustand angezeigt. Über ein nicht näher bezeichnetes Getriebe ist sichergestellt, dass der Klemmverbinder 10 in dieser Stellung nicht versehentlich in den entriegelnden Zustand überführt werden kann. Dies kann erst dann erfolgen, wenn, wie zuvor beschrieben, mittels des Betätigungsstifts 50 die Anzeigeeinheit in den entsprechenden Zustand überführt wurde. Umgekehrt ist sichergestellt, dass die Betätigung des Betätigungsstifts 50 erst dann möglich ist, wenn der Klemmverbinder 10 in der verriegelten Stellung angekommen ist.

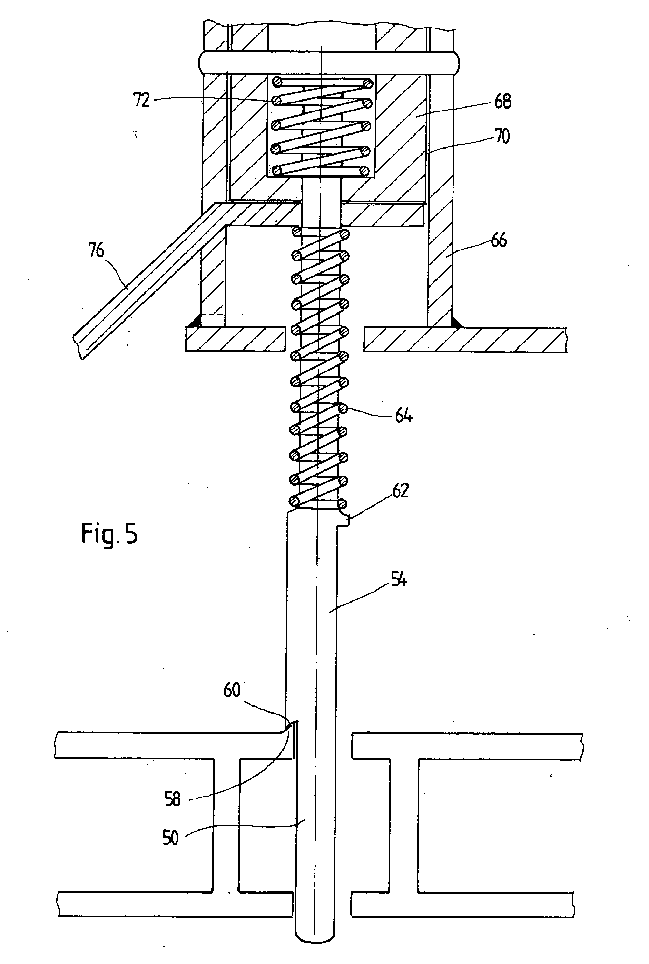

In Fig. 5 ist dargestellt, dass die vorbeschriebene Anordnung mit einem Magnethebel 76 betätigt werden kann. Der Magnethebel 76 kann zu einer automatischen Steuerung gehören, er kann aber auch direkt durch Steuerelemente des Klemmverbinders 10 betätigt werden. Auf diese Weise kann neben der manuellen Betätigung auch eine automatische Betätigung erreicht werden.

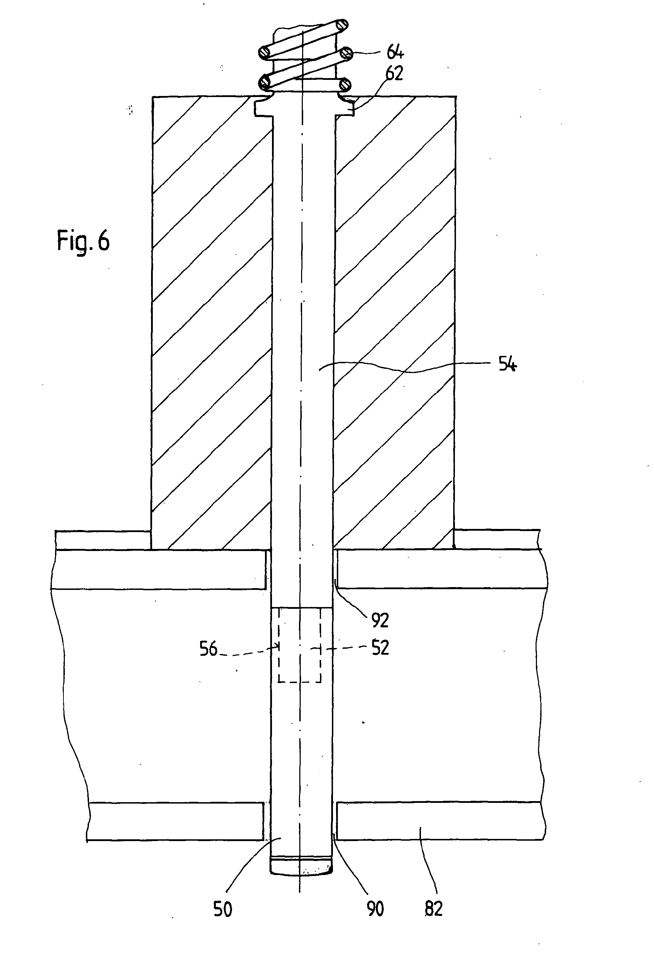

Fig. 6 zeigt eine vergrößerte Darstellung des unteren Bereichs der Steuerung für die Anzeigeeinheit 48 mit dem Betätigungselement 50 und der Antriebsstange 54. Die Anzeige ist hier in einer um 90° gedrehten Version dargestellt, so dass die Rastnase 58 und die Rastnut 60 nicht erkennbar sind.

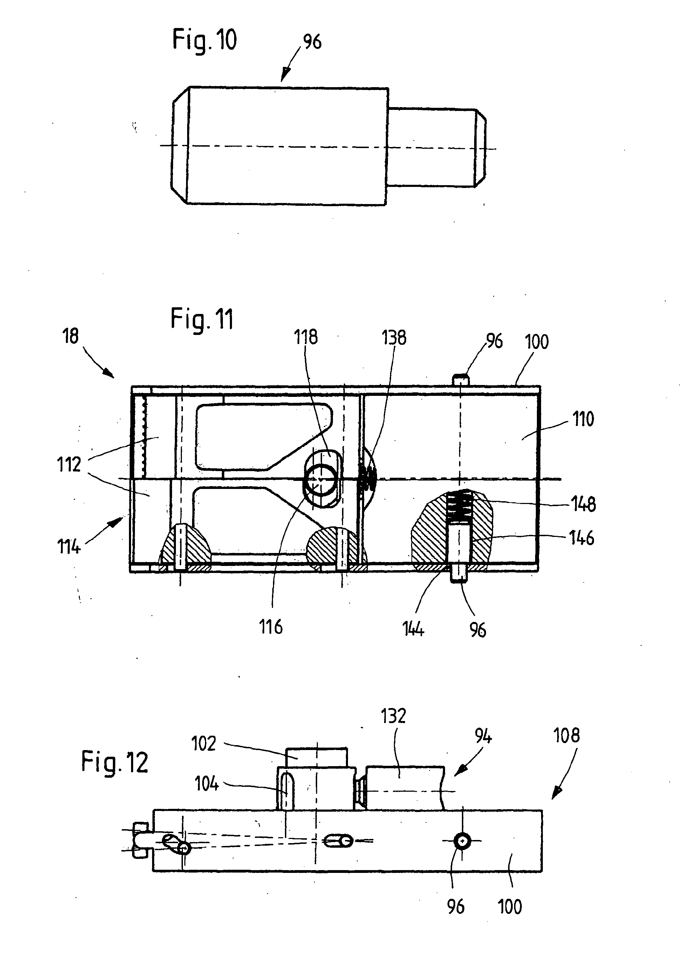

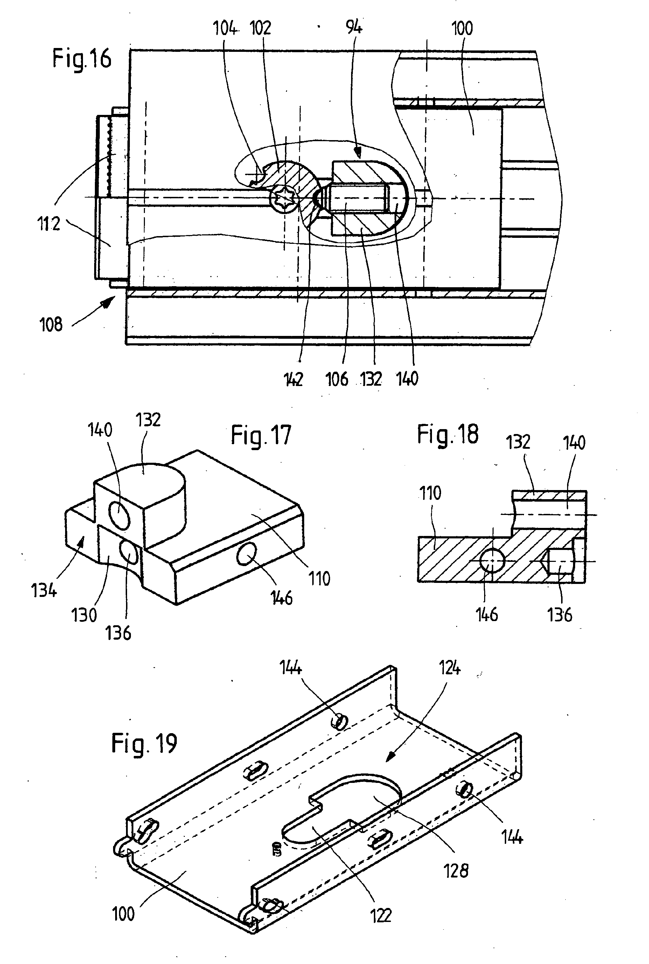

In den Figuren 11 bis 19 ist eine weitere Ausgestaltung der Erfindung in Form eines Klemmverbinders 108, hier Spannschloss genannt, dargestellt. Das Spannschloss 108 dient der lösbaren Verbindung zweier Bauelemente und weist ein Gehäuse 100 auf. Das Gehäuse 100 ist in einem nicht dargestellten Aufnahmeraum eines ersten der Bauelemente festlegbar. Das Gehäuse 100 besteht aus einem im Wesentlichen U-förmig ausgebildeten Profilabschnitt, in dem Öffnungen und Bohrungen für aufzunehmende Bauelemente vorgesehen sind, die im Folgenden noch erläutert werden. Das Gehäuse 100 ist somit im Wesentlichen offen ausgebildet, so dass auf einfache Weise ein Zugriff auf Bauteile des Spannschlosses 108 ermöglicht werden kann (Fig. 19).

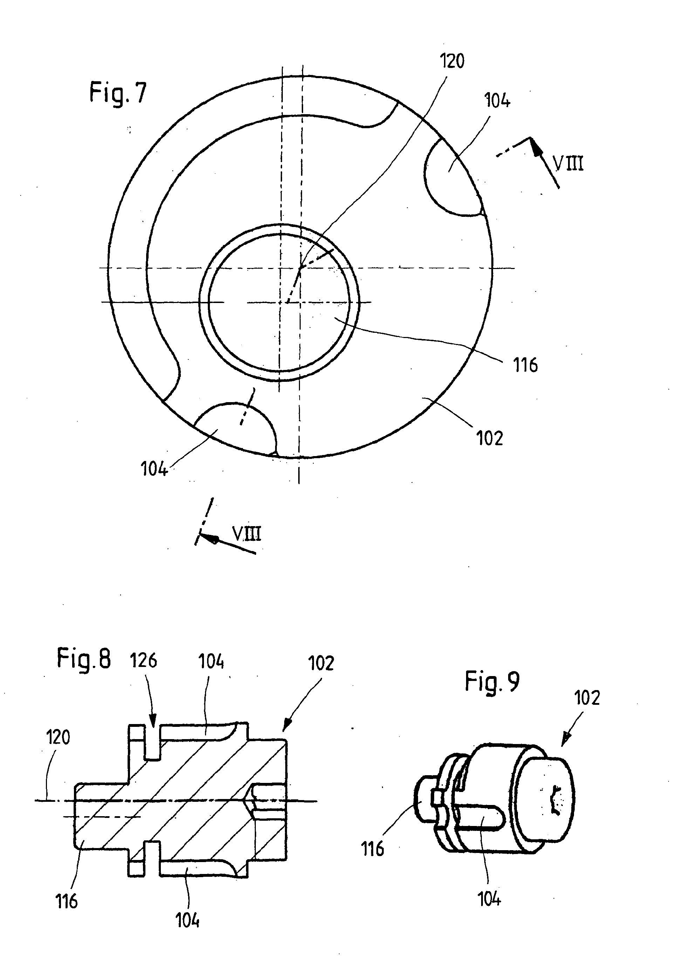

Wie aus Fig. 11 ersichtlich ist, sind im linken Bereich der Darstellung des Spannschlosses 108 zwei im Wesentlichen flach ausgebildete, nebeneinander angeordnete Ankerelemente 112 einer Ankereinheit 114 längsverschieblich angeordnet. Die beiden Ankerelemente 112 weisen an ihren zueinander benachbarten Kanten gegenüberliegende Ausnehmungen auf, die eine Öffnung 118 bilden, in die ein Antriebsfortsatz 116 eines als Betätigungselement dienenden Antriebszapfens 102 hineinragt (Figuren 7 bis 9). Der Antriebsfortsatz 116 ist gegenüber einer Längsmittelachse 120 des Antriebszapfens 102 versetzt angeordnet (Fign. 7, 8). Eine Drehbewegung des Antriebszapfens 102 führt somit zu einer exzentrischen Rotationsbewegung des Antriebsfortsatzes 116. Dadurch, dass der Antriebsfortsatz 116 in die Öffnung 118 eingreift, wird eine Drehbewegung des Antriebszapfens 102 in eine translatorische Bewegung der Ankerelemente 112 der Ankereinheit 114 umgesetzt. Eine Drehbewegung des Antriebszapfens 102 führt somit dazu, die Ankereinheit 114 vom verriegelnden Zustand in den nicht verriegelnden Zustand und umgekehrt zu überführen. Zur Verbindung der nicht dargestellten Bauelemente im verriegelten Zustand greifen die Ankerelemente 122 in eine Ausnehmung des zweiten Bauelements ein.

Figuren 11 bis 13 zeigen das Spannschloss 108 in dem verriegelnden Zustand der Ankereinheit 114. Die Ankerelemente 112 sind in diesem Zustand maximal in das Gehäuse 100 hineingezogen.

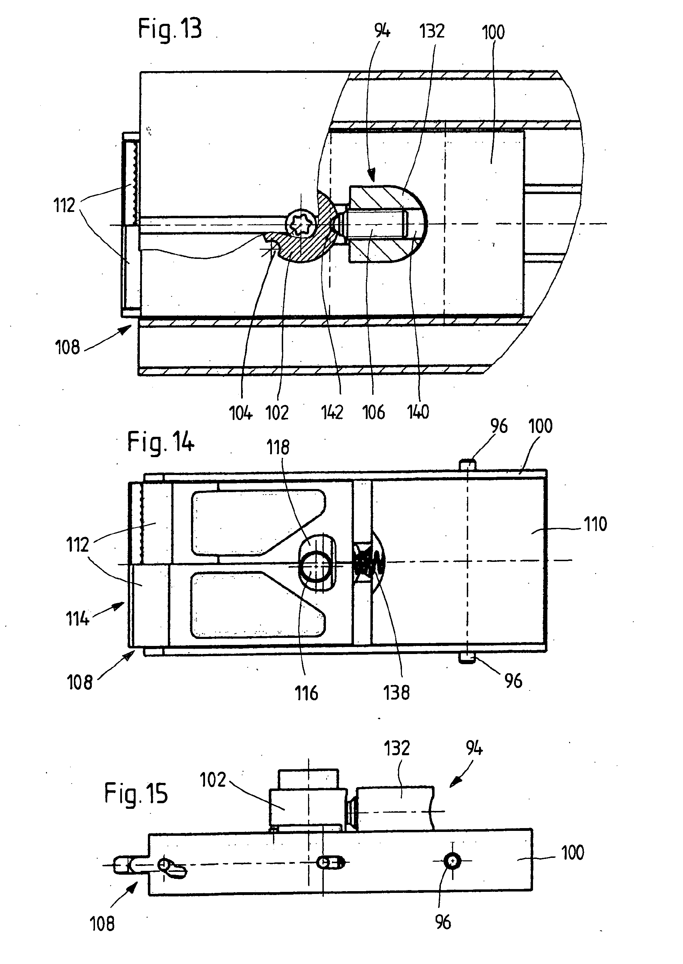

Wie aus Figuren 12 und 13 ersichtlich ist, durchragt der Antriebszapfen 102 das Gehäuse 100. Hierzu weist das Gehäuse 100 eine Öffnung 124 auf, die einen sich verjüngenden Bereich 122 umfasst. Der verjüngende Bereich 122 ist an einem Außendurchmesser einer Nut 126 des Antriebszapfens 102 angepasst ausgebildet (Fig. 8), so dass dieser im sich verjüngenden Bereich 122 in axialer Richtung geführt ist. Ein Bereich 128 der Öffnung 124 (Fig. 19) ist hinsichtlich seiner Öffnungsweite derart ausgebildet, dass der Antriebszapfen 102 in die Öffnung 124 eingeführt werden kann. Dabei wird der Antriebszapfen 102, nachdem er in dem Bereich 128 eingeführt worden ist, seitlich in den Bereich 122 derart verschoben, dass der Rand des Bereichs 122 der Öffnung 124 in die Nut 126 eingreift, um die axiale Festlegung des Antriebszapfens 102 erreichen zu können.

Aus den Figuren 11 und 14 ist ferner eine Arretierungseinrichtung in Gestalt einer Rasteinheit 94 mit einen Einsatzgehäuse 110 für den Antriebszapfen 102 erkennbar, welches in Längsrichtung des Gehäuses 100 benachbart zu den Ankerelementen 112 der Ankereinheit 114 angeordnet ist, das heißt, vorliegend im rechten Bereich des in den Figuren 11 und 14 dargestellten Bereichs des Gehäuses 100. Die Arretierungseinrichtung, das heißt, vorliegend die Rasteinheit 94, ist somit als gegenüber dem Gehäuse 100 separates Bauteil ausgebildet. Das Einsatzgehäuse 110 der Rasteinheit 94 ist im Wesentlichen quaderförmig ausgebildet und weist an seiner den Ankerelementen 112 benachbarten Seite 134 eine Ausnehmung 130 auf. Die Ausnehmung 130 ist im Wesentlichen durch einen kreiszylindrischen Sektor gebildet, der hinsichtlich seines Radius an einen Radius des Antriebszapfens 102 angepasst ist, so dass dieser im montierten Zustand in die Ausnehmung 130 hineinragen kann, ohne in seiner Drehbewegung behindert zu sein. Darüber hinaus ist im Bereich der Ausnehmung 130 eine Sackbohrung 136 angeordnet, in der eine Spiralfeder 138 einsetzbar ist, die die Ankerelemente 112 in die geöffnete Stellung (Fig. 14) vorspannt. Oberhalb der Ausnehmung 130 ist ein Gehäusefortsatz 132 vorgesehen, der eine Durchgangsbohrung 140 aufweist. Die Durchgangsbohrung 140 dient zur Aufnahme eines gegenüber dem Gehäuse 100 festgelegten Arretierungsmittels in Form eines Rastelements 106, welches hinsichtlich seiner Position in dem Gehäusefortsatz 132 in Längsrichtung der Bohrung 140 einstellbar ist (Figuren 13, 16). Das Rastelement 106 weist eine Rastkugel 142 auf. Eine Achse der Bohrung 140 ist auf eine Drehachse des Antriebszapfens 102 ausgerichtet, so dass sich diese schneiden.

Der Gehäusefortsatz 132 ist derart ausgebildet, dass er im montierten Zustand durch den Bereich 128 der Öffnung 124 des Gehäuses 100 hindurchragt und dem Antriebszapfen 102 gegenüberliegt. Das dem Antriebszapfen 102 gegenüberliegende Ende des Rastelements 106 weist die Rastkugel 142 auf, die gegen den Antriebszapfen 102 vorgespannt ist. Die Vorspannung wird mittels einer nicht näher dargestellten Feder im Rastelement 106 erzeugt. Durch die axiale Positionierung des Rastelements 106 in der Bohrung 140 kann die Vorspannung mittels einer in der Bohrung 140 angeordneten Schraube eingestellt werden. Durch die Vorspannung der an dem Antriebszapfen 102 anliegenden Rastkugel 142 ist dieser zugleich im Bereich 122 der Öffnung 124 festgelegt (Figuren 13, 16).

Eine detaillierte Darstellung des Antriebszapfens 102 findet sich in den Figuren 7 bis 9. Aus den Figuren ist ersichtlich, dass der Antriebszapfen 102 an seiner äußeren Oberfläche zwei Vertiefungen 104 als Arretierungsnuten aufweist, die mit der Rastkugel 142 zusammenwirken. Diese Vertiefungen 104 dienen der Anzeige des Zustands der Ankereinheit 114 sowie auch zur Verrastung des Antriebszapfens 102 jeweils in dem verriegelnden und dem nicht verriegelnden Zustand der Ankereinheit 114. Auf diese Weise besteht die Möglichkeit, sowohl optisch als auch taktil den Zustand des Spannschlosses 108 erfassen zu können.

In den Figuren 13, 16 sind die zwei Zustände sowie die Verrastung des Antriebszapfens 102 durch die Rasteinheit 94 dargestellt. Das Einsatzgehäuse 110 der Rasteinheit 94 wird an dem Gehäuse 100 mittels zweier Haltestifte 96 (Fig. 10) festgelegt. Hierzu ist vorliegend quer zu der Sackbohrung 36 eine Durchgangsbohrung 146 etwa mittig im Einsatzgehäuse 110 vorgesehen. In die Bohrung 146 sind gegenüberliegend die Haltestifte 96 eingesetzt, wobei in dem durch die Haltestifte 96 gebildeten Raum innerhalb der Bohrung 146 eine Spiralfeder 148 angeordnet ist, die die Haltestifte 96 in axialer Richtung nach außen vorspannt. Auf diese Weise kann beim Einsetzen des Einsatzgehäuses 110 in das Gehäuse 100 bei Erreichen der vorgegebenen Position des Einsatzgehäuses 110 ein automatisches Festlegen des Einsatzgehäuses 110 dadurch erfolgen, dass die Haltestifte 96 aufgrund ihrer Vorspannung automatisch in die Bohrungen 144 des Gehäuses 100 eingreifen. Somit kann eine einfache, sichere Festlegung des Einsatzgehäuses 110 am Gehäuse 100 erreicht werden. Darüber hinaus kann diese Verbindung auch wieder gelöst werden, indem lediglich die Haltestifte 96 entgegen ihrer Vorspannung soweit in die Bohrung 146 zurückgedrückt werden, dass die Haltestifte 96 außer Eingriff mit der Bohrung 144 des Gehäuses 100 kommen. In dieser Stellung ist das Einsatzgehäuse 110 aus dem Gehäuse 100 entfernbar.

Nicht bezeichnet ist eine Antriebsausnehmung des Antriebszapfens 102, in der ein Schlüssel zum manuellen Antrieb des Antriebszapfens 102 ansetzbar ist. Vorliegend ist hierfür eine Torx-Ausnehmung vorgesehen.

Aus den Figuren 12 und 15 ist ersichtlich, dass die Rastkugel 142 auf dem äußeren Umfang des Antriebszapfens 102 läuft, wenn dieser gedreht wird. Aufgrund der Vorspannung der Rastkugel 142 greift diese automatisch in die jeweilige Vertiefung 104 ein, sobald diese aufgrund einer Drehbewegung des Antriebszapfens 102 der Rastkugel 142 gegenüberliegt (Figuren 13, 16). Durch Aufbringen eines erhöhten Drehmoments, welches vorliegend deutlich erhöht gegenüber dem normalen Drehmoment zum Antrieb des Antriebszapfens 102 ist, kann die Verrastung der Rastkugel 142 in der Vertiefung 104 aufgelöst werden und durch weitere Verdrehung des Antriebszapfens 102 die Ankereinheit 114 von einem Zustand in den jeweiligen anderen Zustand überführt werden. In dieser Ausgestaltung ist vorgesehen, dass die Markierung durch die Vertiefung 104 gebildet ist.

Vorliegend ist vorgesehen, dass der verriegelnde sowie der nicht verriegelnde Zustand mittels der Rasteinheit 94 lösbar festlegbar ist. Natürlich können auch weitere Stellungen, Zwischenpositionen oder dergleichen zum lösbaren Festlegen vorgesehen sein. Zur besseren optischen Erfassung der Vertiefung 104 als Markierung kann diese farblich ausgestaltet sein, so dass sie sich deutlich gegenüber einer Erscheinung der Oberfläche des Antriebszapfens 102 abhebt. Hierdurch kann die optische Erfassung verbessert werden.

Die in den Figuren dargestellten Ausführungsbeispiele dienen lediglich der Erläuterung der Erfindung und sind für diese nicht beschränkend. So können beispielsweise an der Fernsteuerung 28 unterschiedliche Tasten für die jeweiligen Zustände vorgesehen sein, oder es kann vorgesehen sein, dass die Fernsteuerung 28 nur eine sehr kurze Nahverbindung zum Klemmverbinder 10 aufbauen kann und permanent im Sendebetrieb ist, so dass eine Aktivierung des Antriebs 14 des Klemmverbinders 10 dadurch erfolgen kann, dass lediglich die Fernsteuerung 28 in eine ausreichende Nähe zum Klemmverbinder 10 gebracht wird. Die Montage kann weiter vereinfacht werden. Auch weitere Ausgestaltungen und Änderungen können vom Fachmann in naheliegender Weise durchgeführt werden, ohne den Geist der Erfindung zu verlassen.

### Bezuaszeichenliste

- 10: Klemmverbinder
- 12: Pfosten
- 14: Elektromotor
- 16: Riegelklaue
- 18: Anzeigeeinheit
- 20: Betätigungselement
- 22: Steuereinheit
- 24: Kondensator
- 26: Leuchtdiode
- 28: Fernsteuerung
- 30: Taste
- 32: Sende-Empfangseinheit
- 34: Anzeigeneinheit
- 36: Sensor
- 38: Zentrale
- 40: Gehäuse
- 42: Öffnung
- 44: Sende-Empfangseinheit
- 46: Steuereinheit
- 48: Anzeigeeinheit
- 50: Betätigungsstift
- 52: Zapfen
- 54: Antriebsstange
- 56: Sackbohrung
- 58: Rastnase
- 60: Rastnut
- 62: Absatz
- 64: Spiralbohrer
- 66: Halterung
- 68: Kolben
- 70: Zylinder
- 72: Feder
- 74: Anzeigeelement
- 76: Magnethebel
- 78: Schraubbefestigung
- 80: Profilansatz

- 82: Profil
- 84: Haltebügel
- 86: Hülse
- 88: Bohrung
- 90: Profilöffnung
- 92: Öffnung
- 94: Rasteinheit
- 96: Haltestift
- 100: Gehäuse
- 102: Antriebszapfen
- 104: Vertiefung und Markierung
- 106: Rastelement
- 108: Spannschloss
- 110: Einsatzgehäuse
- 112: Ankerelement
- 114: Ankereinheit
- 116: Antriebsfortsatz
- 118: Öffnung
- 120: Achse
- 122: Bereich
- 124: Öffnung
- 126: Nut
- 128: Bereich
- 130: Ausnehmung
- 132: Gehäusefortsatz
- 134: Seite
- 136: Sackbohrung
- 138: Spiralfeder
- 140: Durchgangsbohrung
- 142: Rastkugel
- 144: Bohrung
- 146: Durchgangsbohrung
- 148: Spiralfeder

## Patentansprüche

1. Klemmverbinder (108) zur lösbaren Verbindung zweier Bauelemente, mit einem Gehäuse (100), welches in einem Aufnahmeraum eines ersten der Bauelemente festlegbar ist, wobei in dem Gehäuse (100) ein mittels eines Betätigungselements (102) zwischen einem verriegelnden und einem nicht verriegelnden Zustand bewegbares Ankerelement (112) einer Ankereinheit (114) angeordnet ist, welches Ankerelement (112) zur Verbindung der Bauelemente im verriegelten Zustand in eine Ausnehmung des zweiten Bauelements eingreift, **gekennzeichnet durch** eine Arretierungseinrichtung (94) für das Betätigungselement (102).

2. Klemmverbinder nach Anspruch 1, **dadurch gekennzeichnet, dass** die Arretierungseinrichtung (94) ein gegenüber dem Gehäuse (100) festgelegtes Arretierungsmittel (142) aufweist.

3. Klemmverbinder nach Anspruch 2, **dadurch gekennzeichnet, dass** das Arretierungsmittel (142) eine Kugel, ein Stift, ein Bolzen, eine Schraube oder dergleichen ist.

4. Klemmverbinder nach einem der vorhergehenden Ansprüche 1 bis 3, **dadurch gekennzeichnet, dass** das Betätigungselement (102) eine Arretierungsnut (104) aufweist, die mit dem Arretierungsmittel (142) zusammenwirkt.

5. Klemmverbinder nach einem der vorhergehenden Ansprüche 1 bis 4, **dadurch gekennzeichnet, dass** die Arretierungseinrichtung (94) als gegenüber dem Gehäuse (100) separates Bauteil ausgebildet ist.

6. Klemmverbinder nach Anspruch 5, **dadurch gekennzeichnet, dass** die Arretierungseinrichtung (94) ein Lagerteil für das Arretierungsmittel (142) aufweist.

7. Klemmverbinder nach Anspruch 6, **dadurch gekennzeichnet, dass** das Lagerteil eine im Gehäuse (100) ausgebildete Ausnehmung durchgreift.

8. Klemmverbinder nach Anspruch 1, **gekennzeichnet durch** eine Anzeigeneinheit (18, 48, 74, 104), mit der wenigstens der verriegelnde und/oder der nicht verriegelnde Zustand anzeigbar ist.

9. Klemmverbinder (10) zur lösbaren Verbindung mit einem Bauelement, wobei der Klemmverbinder (10) zum lösbaren Festlegen an dem Bauelement eine mittels eines Betätigungselements (20) zwischen einem verriegelnden und einem nicht verriegelnden Zustand bewegbare Ankereinheit (16) aufweist, **gekennzeichnet durch** eine Anzeigeneinheit (18, 48, 74), mit der wenigstens der verriegelnde und/oder der nicht verriegelnde Zustand anzeigbar ist.

10. Klemmverbinder nach Anspruch 8 oder 9, dass das Betätigungselement (102) eine Markierung aufweist.

11. Klemmverbinder nach Anspruch 10, **dadurch gekennzeichnet, dass** die Markierung durch eine Arretierungsnut (104) gebildet ist.
